# EUROPEAN PATENT SPECIFICATION

(11) **EP 1 085 500 B1**
(45) Date of publication and mention of the grant of the patent: **17.01.2007**
(21) Application number: 00119391.1
(22) Date of filing: 12.09.2000
(51) Int. Cl.: G10L 15/22

(54) **Voice recognition for controlling a device**
Spracherkennung zur Steuerung eines Geräts
Reconnaissance de la parole pour commander un appareil

(30) Priority: 13.09.1999 JP 25858599
(43) Date of publication of application: 21.03.2001
(73) Proprietor: MATSUSHITA ELECTRIC INDUSTRIAL CO., LTD., Kadoma-shi, Osaka 571-8501 (JP)
(72) Inventor: Henmi, Hidemi, Otsu-shi, Shiga-ken (JP)
(74) Representative: Lang, Johannes

(56) References cited:
- WO-A-98/55992
- WO-A-99/45531
- PATENT ABSTRACTS OF JAPAN vol. 016, no. 493 (P-1435), 13 October 1992 (1992-10-13) & JP 04 177400 A (CLARION CO LTD), 24 June 1992 (1992-06-24)
- PATENT ABSTRACTS OF JAPAN vol. 1999, no. 03, 31 March 1999 (1999-03-31) & JP 10 319991 A (SONY CORP), 4 December 1998 (1998-12-04)

## Description

### BACKGROUND OF THE INVENTION

### Field of the Invention

The present invention relates to voice recognition devices and methods for device control with voice and, more specifically, to a voice recognition device and method which work well for controlling a sound output device such as television.

### Description of the Background Art

So far, device control with buttons provided on devices and remote controllers has been prevalent. Recently, with the progression of voice recognition technology, device control with voice became popular for mobile phones and car navigation systems, for example.

Document WO 98/55992 discloses a household appliance that can be controlled with voice signals, wherein a user input is a plurality of words defined by a sequence of a menu tree, and a command signal for the appliance to be controlled is only generated if the input is judged to be a correct menu tree sequence and the words are inputted within a set time period.

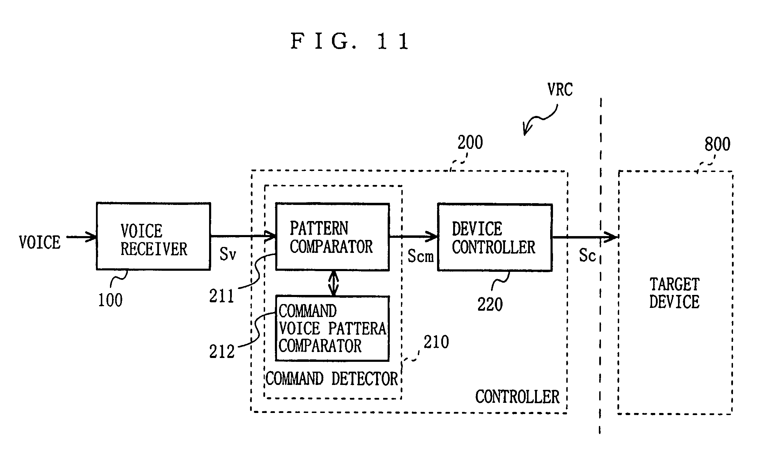

Referring to FIG. 11 for block diagram, described below is the configuration of a conventional voice recognition device, which is connected to a target device for control.

As shown in FIG. 11, a voice recognition device VRC includes a voice receiver 100 and a controller 200. The controller 200 is connected to a target device 800, and controls the operation thereof. The controller 200 includes a command detector 210 and a device controller 220. The command detector 210 is provided with a pattern comparator 211 and a command voice pattern storage 212. Described below is the operation of the voice recognition device VRC.

Once a user uttered a predetermined command to control the target device 800, the commanded voice is converted into a voice signal Sv by the voice receiver 100. The voice signal Sv is then applied to the command detector 210, where the command in the voice signal Sv is detected. More specifically, the command voice pattern storage 212 is previously provided with a plurality of sample command voice patterns for the purpose of controlling the target device 800. The pattern comparator 211 compares those with a sound pattern of the voice signal Sv for any matching, and if any, a command signal Scm corresponding to the detected command is outputted therefrom. Based on the command indicated by the command signal Scm, the device controller 220 generates a control signal Sc for controlling the target device 800.

Such conventional voice recognition device, however, is always in a ready state for voice commands. Therefore, even when the user utters no command, the device may erroneously recognize ambient noise therearound, typified by conversations, as the user's command, and result in unintended malfunction. Assuming that the target device for control is a television which constantly outputs sound, the voice recognition device is more likely to confuse the sound therefrom with the user's command.

In order to get around such problem, disclosed in Japanese Patent Laid-Open Publication No. 61-225996 (86-225996) is a method of controlling voice recognition processing with the flick of a switch. With this method, the voice recognition processing is carried out only when the user utters his/her command with the switch turned on, and accordingly the possibility for the erroneous recognition can be reduced.

With such method, however, the user has to turn on the switch to give his/her command. Therefore, the user finds it inconvenient if he/she cannot keep the switch at hand or is busy with hands to turn on the switch. Moreover, this method is not that useful for a case where the target device is exemplarily a television which constantly outputs sound. This is because, as described above, the sound from the television is inputted together with the user's command while the switch is on, and thus leads to erroneous recognition.

### SUMMARY OF THE INVENTION

Therefore, an object of the present invention is to provide a voice recognition device and method for device control with voice in a simple operation, preventing erroneous recognition caused by ambient noise, and the like, around the device. Another object of the present invention is to provide a voice recognition device and method for controlling, with voice, a sound output device such as television, lessening erroneous recognition caused by sound from the sound output device.

According to the invention, there are provided a voice recognition device as set forth in claim 1, a voice recognition method as set forth in claim 7, and a computer readable recording medium as set forth in claim 8. Preferred embodiments are set forth in the dependent claims. the voice provided by the voice receiver, and enabling the

As described above, in the above-described aspect, a command is accepted only for a predetermined length of time after a keyword is inputted. Therefore, erroneous recognition can be prevented. Moreover, as a user utters the keyword, there is no more need to actuate a button, and the like, for control device, whereby device control is achieved even if the user is busy with hands.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the configuration of a voice recognition device according to a first embodiment of the present invention;
FIG. 2 is a flowchart for the operation of an enabler 300 of the first embodiment;
FIG. 3 is a block diagram showing the configuration of a voice recognition device according to a second embodiment;
FIG. 4 is a flowchart for the operation of an enabler 301 of the second embodiment;
FIG. 5 is a block diagram showing the configuration of a voice recognition device according to a third embodiment;
FIG. 6 is a flowchart for the operation of the enabler 300 and a volume controller 400 in the third embodiment;
FIG. 7 is a block diagram showing the configuration of a voice recognition device according to a fourth embodiment;
FIG. 8 is a flowchart for the operation of the enabler 300 and a sound output component suppresser 500 in the fourth embodiment;
FIG. 9 is a block diagram showing the configuration of a voice recognition device according to a fifth embodiment;
FIG. 10 is a flowchart for the operation of the enabler 301, the volume controller 400, and the sound output component suppresser 500 in the fifth embodiment; and
FIG. 11 is a block diagram showing the configuration of a conventional voice recognition device.

### DESCRIPTION OF THE PREFERRED EMBODIMENTS

With reference to the accompanying figures, described below by way of embodiments is a voice recognition device of the present invention for device control with voice, capable of lessening erroneous recognition.

### (First Embodiment)

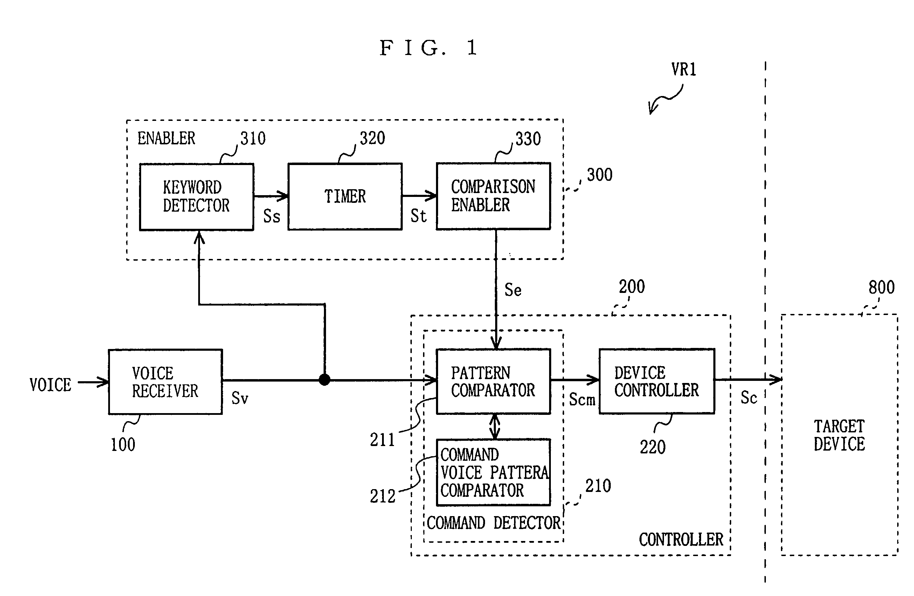

By referring to FIG. 1 for block diagram, described below is the configuration of a voice recognition device of a first embodiment, being connected to a target device for control, and preventing erroneous recognition by accepting a command only for a predetermined period after receiving a keyword. Herein, any constituent found in FIG. 11 is denoted by the same reference numeral.

As shown in FIG. 1, a voice recognition device VR1 of the first embodiment includes the voice receiver 100, the controller 200, and an enabler 300. The controller 200 is connected to both the voice receiver 100 and the enabler 300, and generates a control signal Sc for controlling the target device 800. The controller 200 includes the command detector 210 and the device controller 220. The command controller 210 is provided with the pattern comparator 211 and the command voice pattern storage 212. The enabler 300 includes a keyword detector 310, a timer 320, and a comparison enabler 330.

Described next below is the operation of the voice recognition device VR1.

The voice receiver 100 converts an incoming voice into a voice signal Sv. The voice signal Sv is applied to the controller 200 and the enabler 300. In the controller 200, the command detector 210 detects the command in the voice signal Sv. To be more specific, the command voice pattern storage 212 is previously provided with a plurality of sample command voice patterns for the purpose of controlling the target device 800. The pattern comparator 211 compares those with a sound pattern of the voice signal Sv for any matching, and if any, a command signal Scm corresponding to the detected command is outputted therefrom. Based on the command signal Scm, the device controller 220 generates a control signal Sc so as to control the target device 800. Note herein that, the controller 200 can control the target device 800 only for a command input period, which is determined by the enabler 300. Described next is the operation of the enabler 300.

The keyword detector 310 detects a keyword from the voice signal Sv provided by the voice receiver 100, and then outputs a start signal Ss. This keyword is predetermined as a cue for command input, and is uttered before a command. In response to the start signal Ss, the timer 320 starts counting a predetermined length of time. The timer 320 then outputs a time signal St indicating whether or not the timer 320 is in its counting process. Based on the time signal St, the comparison enabler 330 keeps outputting an enable signal Se for the counting duration of the timer 320 so as to enable the operation of the pattern comparator 211. As such, the counting duration of the timer 320 is the above-described command input period. In an example not in accordance with the invention, the keyword detector 310 may be functionally substituted by the command detector 210. In detail, the command voice pattern storage 212 may be previously provided with a voice pattern of the keyword in addition to sample command voice patterns. Based on those, the pattern comparator 211 may detect the keyword from the voice signal Sv, and then output the start signal Ss to the timer 320.

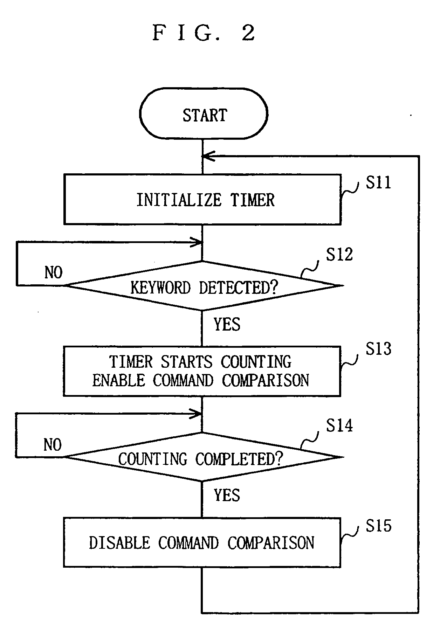

By referring to FIG. 2 for flowchart, the enabler 300 is described for its operation, which is the characteristics of the present invention. Although the components in this embodiment can be implemented by hardware, it is now assumed that those are exemplarily implemented by software. Accordingly, shown in the flowchart in FIG. 2 is the operation of a CPU, which is not shown.

Once the voice recognition processing was started, the voice receiver 100 converts an incoming voice into a voice signal Sv. In the enabler 300, the timer 320 is initialized (S11) to be ready for an incoming keyword (S12). After the keyword is detected in the voice signal Sv, the command input period is started to be counted, and command comparison operation in the pattern comparator 211 is enabled (S13). While the command input period is counted (S14), the target device 800 is under the control of the controller 200. Once the command input period was thoroughly counted by the timer 320, the command comparison operation in the pattern comparator 211 is disabled (S15), and the timer 320 is initialized (S11) to be ready for the keyword again (S12).

As is known from the above, the voice recognition device of the first embodiment does not accept any command until a keyword is detected in the voice signal Sv. Therefore, for device control, the user needs to utter a keyword first, and then a command during the command input period. If the user does not utter the command in the command input period, the command is not accepted unless the keyword is uttered again.

Herein, if the keyword is common in daily life, the voice recognition device may confuse the keyword with conversations therearound, and thus the device mistakenly starts to accept command. By taking this into consideration, the keyword is preferably a magic spell or nickname, being original and uncommon in the daily life.

As described in the foregoing, in the first embodiment, a user has to utter a keyword first and then a command for device control. In this manner, the voice recognition device is prevented from erroneously recognizing conversations therearound, sound from a target device, etc., as the user's command even when the user utters no command.

### (Second Embodiment)

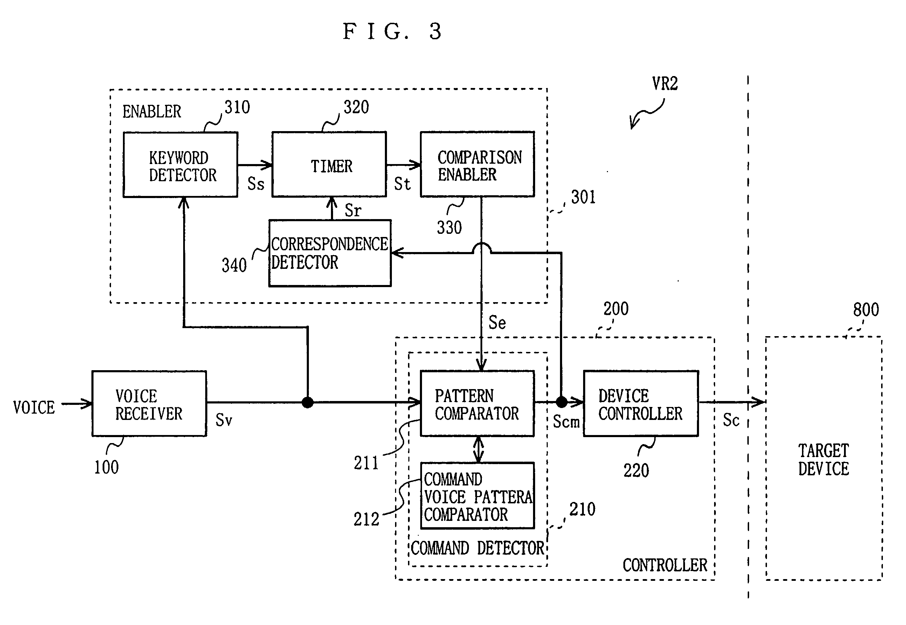

By referring to FIG. 3 for block diagram, described below is the configuration of a voice recognition device VR2 according to a second embodiment, being connected to a target device for control, and sparing the user the trouble of uttering the same keyword every time the command input period is over. The voice recognition device VR2 is almost the same as that in the first embodiment except a correspondence detector 340, which is newly provided. Thus, any identical component is under the same reference numeral, and is not described again. An enabler 301 is provided with the keyword detector 310, the timer 320, and the comparison enabler 330 as in the first embodiment, and is newly provided with the correspondence detector 340. The correspondence detector 340 is connected to both the pattern comparator 211 and the timer 320.

Described below is the operation of the voice recognition device VR2 only for any component different from the device in the first embodiment.

In a similar manner to the first embodiment, once the keyword detector 310 detected a keyword, the timer 320 starts counting the command input period so that the operation of the pattern comparator 211 is enabled. The comparison result is conveyed by the command signal Scm to the device controller 220 and the correspondence detector 340. Based on the command signal Scm, the device controller 220 controls the target device 800. The correspondence detector 340 outputs a reset signal Sr responding to the command signal Scm, and then resets the timer 320. Thereafter, the timer 320 starts counting the time from 0.

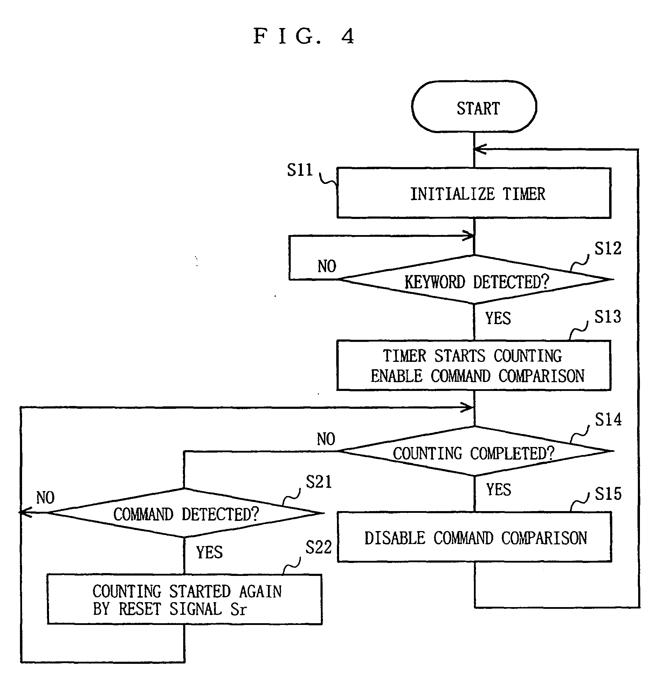

By referring to FIG. 4 for flowchart, the operation of the enabler 301 is now described. Herein, any step identical in the flowchart of FIG. 2 is provided with the same step number, and is not described again.

The command input period which is equal to the counting duration of the timer 320 is constant in the first embodiment. In the second embodiment, however, the voice recognition device accepts a command (S21) while the timer 320 is counting the time (S14), and if any command is detected in the meantime, the timer 320 is caused to start counting the time again from 0 by the reset signal Sr (S22). In other words, every time a command is detected in the command input period, the timer 320 starts counting the time from 0. With the command input period lengthened as such, the user has no more need to utter the same keyword every time the command input period is over.

Herein, the correspondence detector 340 is so configured as to receive the command signal Scm from the pattern comparator 211 and output the reset signal Sr to the timer 320. Such configuration is not restrictive, and the pattern comparator 211 may functionally substitute therefor by outputting the reset signal Sr to the timer 320 when detecting any command.

As described in the foregoing, in the second embodiment, the command input period is automatically lengthened for each command. Therefore, the command input period never be over until the user finishes successively uttering a plurality of commands. In such manner, the user can spare the trouble of uttering the same keyword every time the command input period is over.

### (Third Embodiment)

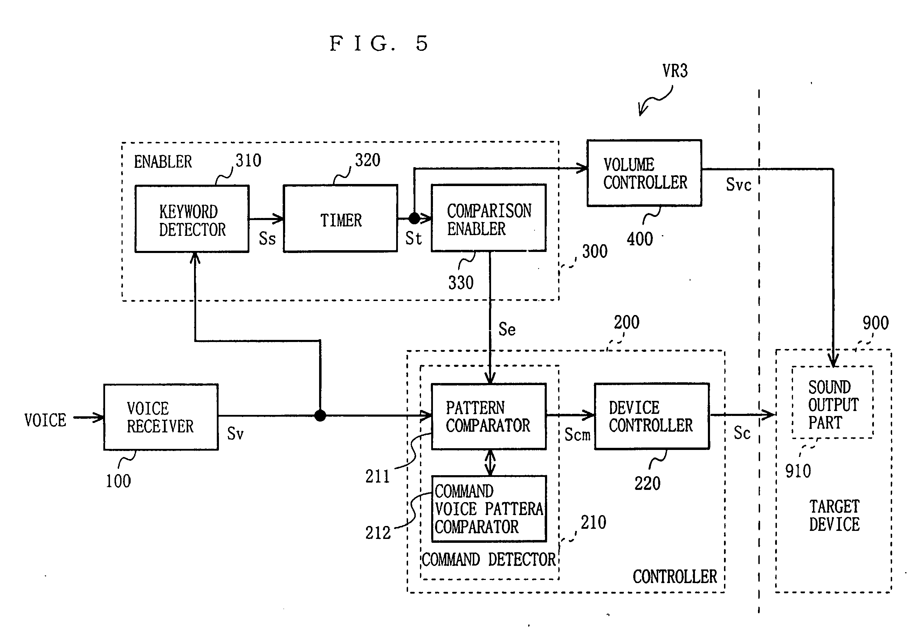

By referring to FIG. 5 for block diagram, described below is the configuration of a voice recognition device VR3 according to a third embodiment, being connected to a target device including a sound output part, and effectively reducing erroneous recognition by turning down sound output therefrom for the command input period after detecting a keyword. The voice recognition device VR3 is almost the same as that in the first embodiment except a volume controller 400, which is newly provided. And a target device 900 connected thereto is additionally provided with a sound output part 910. Thus, any identical component is under the same reference numeral, and is not described again. The volume controller 400 is connected to both the timer 320 and the sound output part 910 in the target device 900.

Described below is the operation of the voice recognition device VR3 only for any component different from the device in the first embodiment.

In a similar manner to the first embodiment, once the keyword detector 310 detected a keyword, the timer 320 starts counting the command input period so that the operation of the pattern comparator 211 is enabled. The time signal St outputted from the timer 320 is applied also to the volume controller 400. Based thereon, the volume controller 400 outputs a volume control signal Svc, and turns down the volume of the sound output part 910 only for the command input period.

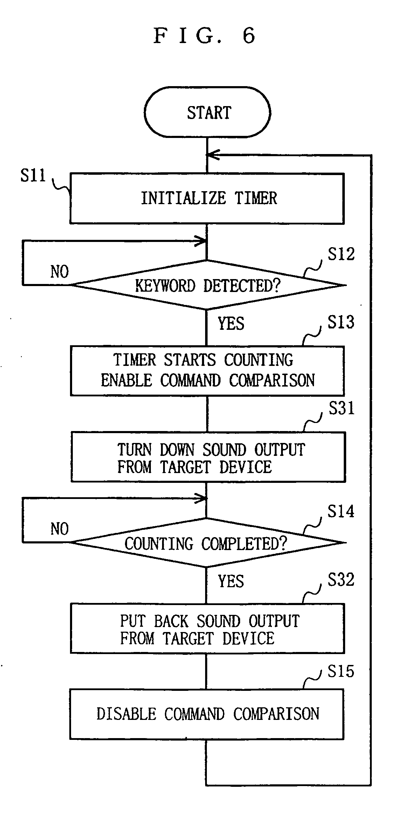

By referring to FIG. 6 for flowchart, the enabler 300 and the volume controller 400 are described for their operations. Herein, any step identical in the flowchart of FIG. 2 is under the same step number, and is not described again.

In the third embodiment, once the timer 320 started counting and the command comparison operation is enabled in the pattern comparator 211 (S13), the volume of the sound output part 910 is turned down by the volume control signal Svc (S31). The volume of the sound output part 910 is turned back after the timer 320 finished counting (S32). In other words, the volume of the sound output part 910 is turned down only for the command input period.

Herein, the sound output from the sound output part 910 is turned down only for the command input period, but may be turned off. If turned down, the user can utter a command for the command input period while listening to the sound from the sound output part 910, and if turned off, the user's command can be recognized with higher accuracy, and accordingly erroneous recognition can be reduced.

As described in the foregoing, the volume of the sound output part 910 is turned down only for the command input period. Accordingly, such sound output therefrom for the command input period may not confuse the voice recognition device, and thus the command comparison operation in the pattern comparator 211 can be carried out with higher accuracy. This is effective for a case where the sound output from the sound output part 910 includes voice. Therefore, the voice recognition device of the second embodiment works well for controlling a sound output device such as television.

### (Fourth Embodiment)

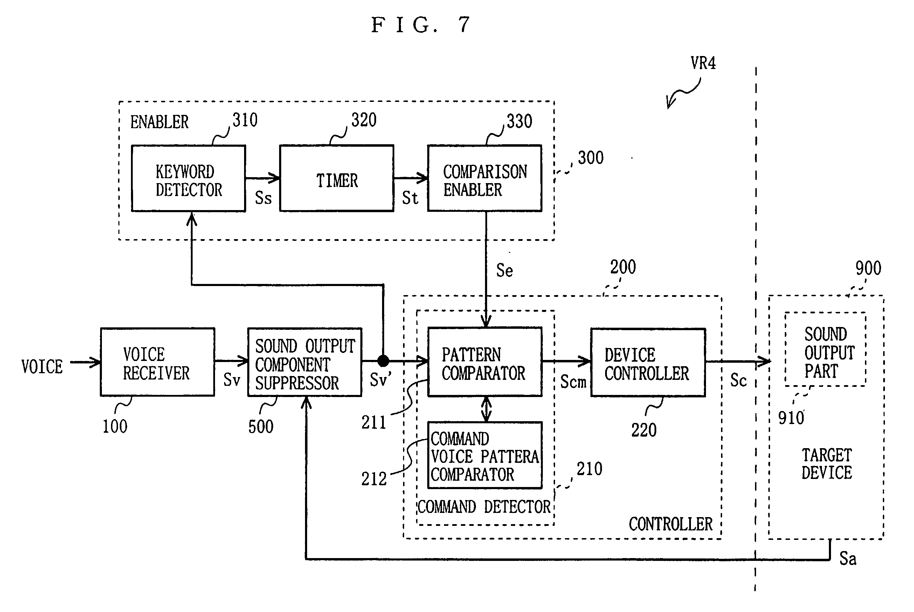

By referring to FIG. 7 for block diagram, described below is the configuration of a voice recognition device VR4 according to a fourth embodiment, being connected to a target device including a sound output part, and effectively reducing erroneous recognition to a greater extent by reducing a sound output component from the target device mixing into an incoming voice. The voice recognition device VR4 is almost the same as that in the first embodiment except a sound output component suppresser 500, which is newly provided. The target device 900 connected thereto is provided with the sound output part 910 as in the third embodiment. Thus, any identical component is under the same reference numeral, and is not described again. The sound output component suppresser 500 is provided subsequent to the voice receiver 100, and is connected to the target device 900.

Described below is the operation of the voice recognition device VR4 only for any component different from the device in the first embodiment.

The sound output component suppresser 500 reduces the sound output component of the sound output part 910 mixing into a voice signal Sv provided by the voice receiver 100. Then, a voice signal Sv' with suppressed sound output component is applied to both the keyword detector 310 and the pattern comparator 211. To be more specific, the sound output component suppresser 500 receives both the voice signal Sv from the voice receiver 100 and a sound output signal Sa, which is inputted into the sound output part 910 and then outputted therefrom as the sound output. The sound output component suppresser 500 subjects these signals to a predetermined operation processing so as to reduce the sound output component mixed in the voice signal Sv. Such operation processing may vary from a simple subtraction of the sound output signal Sa, in percentages, from the voice signal Sv to a complicated operation with a transmission loss considered. Which manner is not an issue here.

The voice signal Sv' is applied to both the keyword detector 310 and the pattern comparator 211, and based thereon, processing is carried out in a similar manner to the first embodiment.

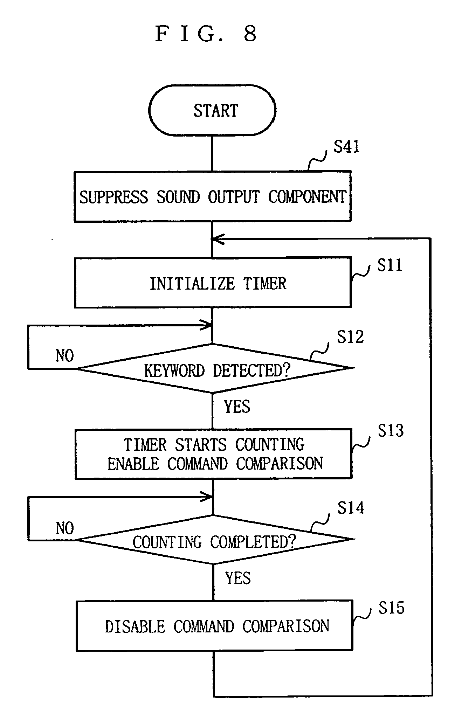

By referring to FIG. 8 for flowchart, the sound output component suppresser 500 and the enabler 300 are described for their operations. Herein, any step identical in the flowchart of FIG. 2 is provided with the same step number, and is not described again.

In the fourth embodiment, the sound output component mixed into the voice signal Sv is reduced (S41), and based on the voice signal Sv' with reduced sound output component, the processing is carried out in a similar manner to the first embodiment. Such processing for reducing the sound output component in the sound signal Sv is constantly carried out regardless of the command input period.

As such, in the fourth embodiment, the keyword detector 310 and the command detector 210 detect a keyword and a command from the voice signal Sv', respectively. Accordingly, even when the sound output from the sound output part 910 goes to the voice receiver 100, the keyword detector 310 and the pattern comparator 211 can retain their accuracy for keyword detection and command comparison, respectively. Especially for a case where the sound output from the sound output part 910 includes voice, the voice recognition device may not confuse such voice with the user's voice. Therefore, the voice recognition device of the fourth embodiment works well for controlling a sound output device such as television. Moreover, command recognition can be done with higher accuracy in the command input period without turning down the sound output from the sound output part 910, whereby the user can utter his/her command while listening to the sound output from the target device 900. This is especially effective for a command to control the volume of the target device 900 since the user can check the volume in real time.

### (Fifth Embodiment)

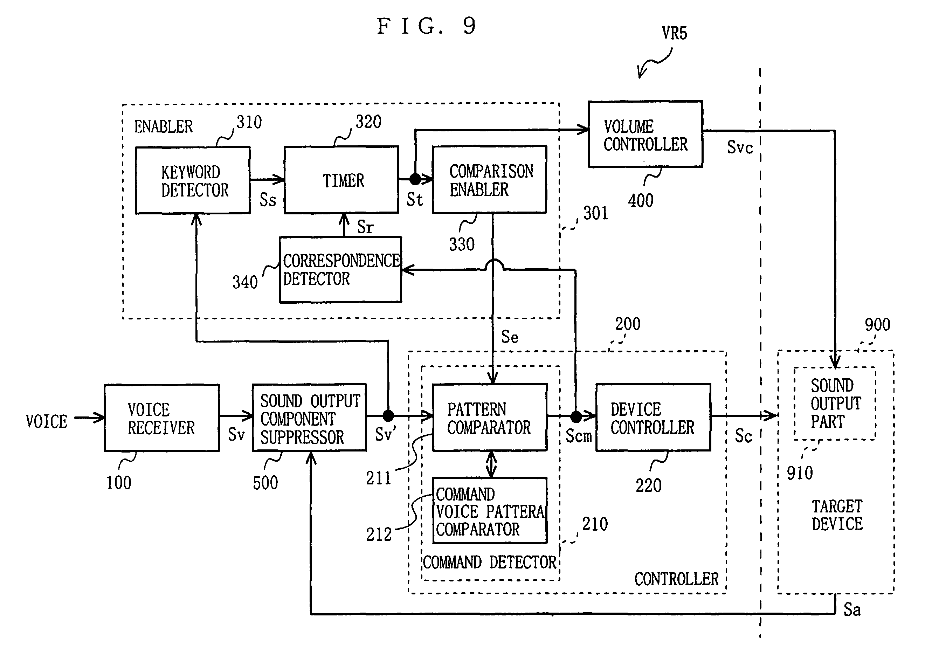

Depicted in FIG. 9 is the configuration of a voice recognition device VR5 according to a fifth embodiment, being connected to a target device including the sound output part, and provided with every characteristic component in the first to fourth embodiments.

As shown in FIG. 9, the voice recognition device VR5 is additionally provided with the correspondence detector 340, the volume controller 400, and the sound output component suppresser 500 compared with the device in the first embodiment. Described below is the operation of the voice recognition device VR5 of the fifth embodiment.

Herein, a voice signal Sv provided by the voice receiver 100 is converted into a voice signal Sv' in the sound output component suppresser 500. This is done based on a sound output signal Sa from the target device 900. Based on the voice signal Sv', the keyword detector 310 and the pattern comparator 211 each detect a keyword and a command, respectively. Once the keyword detector 310 detected the keyword and thus command is started to be accepted, the volume controller 400 turns down the volume of the sound output part 910 with the volume control signal Svc. The correspondence detector 340 receives a command signal Scm from the pattern comparator 211, and then outputs a reset signal Sr to the timer 320. In response thereto, the timer 320 starts counting the command input period again from 0. Once the timer 320 finished its counting, the volume controller 400 outputs a volume control signal Svc to turn back the volume of the sound output part 910.

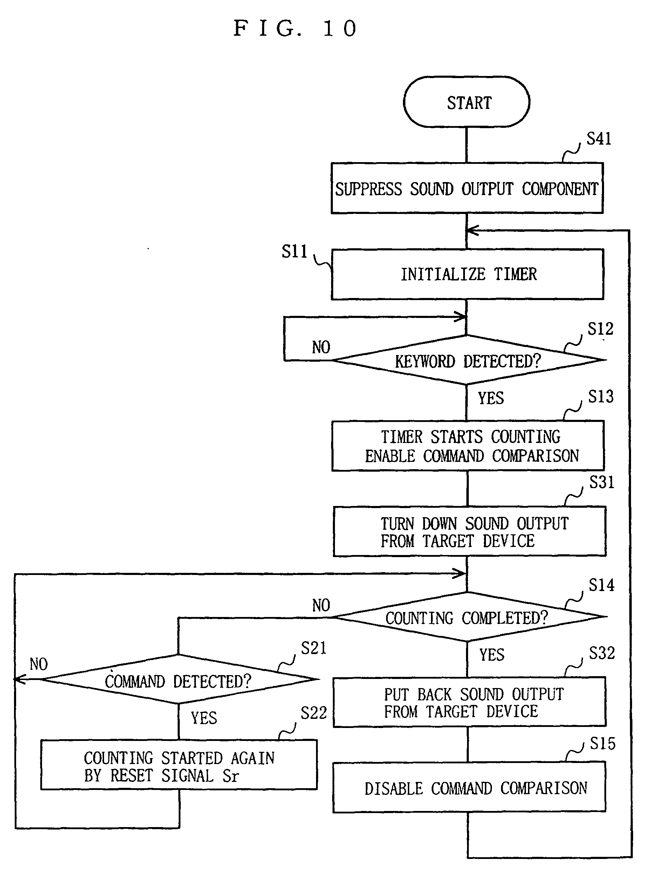

Depicted in FIG. 10 is a flowchart for the operations of the enabler 301, the volume controller 400, and the sound output component suppresser 500. Herein, any step identical in the flowchart of FIG. 2, 4, 6, or 8 is provided with the same step number. The operation found in the flowchart of FIG. 10 is already well described in the foregoing, and is not described again.

As is known from the above, in the fifth embodiment, the sound output from the sound output part 910 is neither turned down nor off for a keyword input period, i.e., a period excluding the command input period, but only the sound output component mixing into the voice signal Sv is reduced. In such manner, even if the sound from the sound output device 910 is in a normal volume, the keyword can be detected with higher accuracy. For the command input period, on the other hand, the sound output from the sound output part 910 is turned down or off, and the sound output component mixing into the voice signal Sv is also reduced. Accordingly, the command recognition in the command input period is improved in accuracy, reducing erroneous recognition resulted from the sound from the target device to a greater extent.

Herein, the keyword can be a magic spell or nickname, being original and uncommon in the daily life. The command, however, is often found familiar in the daily life. Therefore, the command is more likely to be erroneously recognized than the keyword due to the sound from the television, for example. In this respect, as is done in this embodiment, it is preferable to turn down or off the sound output from the sound output part 910 while the voice signal Sv is reduced in the sound output component. Therefore, the voice recognition device of the fifth embodiment works well for controlling a device as television which constantly outputs sound, especially human voice, and for assuredly preventing erroneous recognition.

Note herein that, the voice recognition device of the fifth embodiment is the one including every characteristic component in the second to fourth embodiments, which are the correspondence detector 340, volume controller 400, and sound output component suppresser 500. As is obvious from the above, however, any arbitrary two component selected therefrom in addition to the structure in the first embodiment can surely implement the voice recognition device.

While the invention has been described in detail, the foregoing description is in all aspects illustrative and not restrictive. It is understood that numerous other modifications and variations can be devised without departing from the scope of the invention, which is defined by the claims.

## Claims

1. A voice recognition device (VR1) for controlling a target device (800) with a command uttered by a user, comprising:
voice receive means (100) for receiving a voice; and
control means (200) for detecting said command in the voice (Sv) received via said voice receive means (100), and controlling said target device (800) based on said detected command;
**characterized in further comprising**
separate enable means (300) for detecting a predetermined keyword in the voice (Sv) received via said voice receive means (100), and enabling said control means (200) to perform detection of said command only for a predetermined command input period after said keyword has been detected, wherein said keyword is not part of said command.

2. The voice recognition device (VR1) according to claim 1, wherein
said predetermined keyword is a magic spell or a nickname.

3. The voice recognition device (VR1) according to claim 1, wherein said enable means (300) further comprises:
keyword detect means (310) for detecting said predetermined keyword in the voice (Sv) via said voice receive means (100);
timer means (320) for starting counting said command input period when said keyword detect means (310) detects said keyword; and
comparison enable means (330) for enabling said control means (200) to detect said command only for a period when said timer means (320) is counting said command input period.

4. The voice recognition device (VR2) according to claim 1, wherein
said enable means (301) further comprises correspondence detect means (340) for lengthening said command input period every time said control means (200) detects the command in the command input period.

5. The voice recognition device (VR3) according to claim 1, further comprising volume control means (400) for turning down or off a sound input of said target device (900) for said command input period.

6. The voice recognition device (VR4) according to claim 1, further comprising sound input component reduction means (500) for suppressing the voice (Sv) via said voice receive means (100) in a component corresponding to the sound output of said target device (900).

7. A voice recognition method for controlling a target device (800) with a command uttered by a user, comprising:
a step of receiving voice; and
a step of detecting said command in said received voice (Sv) performed by control means (200); a step of controlling said target device (800) based on said detected command;
**characterized in further comprising**
a step (S12, S13, S14, and S15) of detecting a predetermined keyword in said received voice performed by separate enable means (300), and enabling said step of detecting said command only for a predetermined command input period after said keyword has been detected, wherein said keyword is not part of said command.

8. A computer readable recording medium on which a program to be executed on a computer is recorded, the program comprising computer program code means which when executed, cause the computer to perform all the steps of the method of claim 7.

## Patentansprüche

1. Spracherkennungsvorrichtung (VR1) zum Steuern einer Zielvorrichtung (800) mit einem Befehl, der von einem Benutzer geäußert wird, aufweisend:
Sprachempfangsmittel (100) zum Empfangen einer Sprache; und
Steuermittel (200) zum Erkennen des Befehls in der Sprache (Sv), empfangen über die Sprachempfangsmittel (100), und Steuern der Zielvorrichtung (800) basierend auf dem erkannten Befehl;
**dadurch gekennzeichnet, dass** sie ferner aufweist
separate Freigabemittel (300) zum Erkennen eines vorherbestimmten Schlüsselworts in der Sprache (Sv), empfangen über die Sprachempfangsmittel (100), und Freigeben der Steuermittel (200), um Erkennung des Befehls auszuführen, allein für eine vorherbestimmte Befehlseingabeperiode, nachdem das Schlüsselwort erkannt wurde, worin das Schlüsselwort kein Teil des Befehls ist.

2. Spracherkennungsvorrichtung (VR1) nach Anspruch 1, worin
das vorherbestimmte Schlüsselwort ein Zauberspruch oder ein Spitzname ist.

3. Spracherkennungsvorrichtung (VR1) nach Anspruch 1, worin das Freigabemittel (300) ferner aufweist:
Schlüsselworterkennungsmittel (310) zum Erkennen des vorherbestimmten Schlüsselworts in der Sprache (Sv) über die Sprachempfangsmittel (100);
Timermittel (320) zum Starten von Zählen der Befehlseingabeperiode, wenn das Schlüsselworterkennungsmittel (310) das Schlüsselwort erkennt; und
Vergleichsfreigabemittel (330) zum Freigeben der Steuermittel (200), um den Befehl zu erkennen, allein für eine Periode, wenn das Timermittel (320) die Befehlseingabeperiode zählt.

4. Spracherkennungsvorrichtung (VR2) nach Anspruch 1, worin
das Freigabemittel (301) ferner Entsprechungserkennungsmittel (340) aufweist, um die Befehlseingabeperiode zu verlängern jedes Mal, wenn das Steuermittel (200) den Befehl in der Befehlseingabeperiode erkennt.

5. Spracherkennungsvorrichtung (VR3) nach Anspruch 1, ferner aufweisend Lautstärkesteuermittel (400) zum Herunterdrehen oder Ausschalten eines Lauts, eingegeben von der Zielvorrichtung (900) für die Befehlseingabeperiode.

6. Spracherkennungsvorrichtung (VR4) nach Anspruch 1, ferner aufweisend Lauteingabekomponenten-Reduktionsmittel (500) zum Unterdrücken der Sprache (Sv) über die Sprachempfangsmittel (100) in einer Komponente, welche der Lautausgabe der Zielvorrichtung (900) entspricht.

7. Spracherkennungsverfahren zum Steuern einer Zielvorrichtung (800) mit einem Befehl, der von einem Benutzer geäußert wird, aufweisend:
einen Schritt des Empfangens einer Sprache; und
einen Schritt des Erkennens des Befehls in der empfangenen Sprache (Sv), ausgeführt durch Steuermittel (200);
einen Schritt des Steuerns der Zielvorrichtung (800) basierend auf dem erkannten Befehl;
**dadurch gekennzeichnet, dass** es ferner aufweist
einen Schritt (S12, S13, S14 und S15) des Erkennens eines vorherbestimmten Schlüsselworts in der empfangenen Sprache, ausgeführt durch getrennte Freigabemittel (300), und Freigeben des Schritts des Erkennens des Befehls allein für eine vorherbestimmte Befehlseingabeperiode, nachdem das Schlüsselwort erkannt wurde, worin das Schlüsselwort kein Teil des Befehls ist.

8. Computer-lesbares Aufzeichnungsmedium, auf welchem ein auf einem Computer auszuführendes Programm aufgezeichnet ist, wobei das Programm Computerprogrammbefehlsmittel aufweist, welche, wenn sie ausgeführt werden, den Computer dazu veranlassen, all die Schritte des Verfahrens nach Anspruch 7 auszuführen.

## Revendications

1. Dispositif de reconnaissance vocale (RV1) pour commander un dispositif cible (800) avec une commande prononcée par un utilisateur, comprenant :
un moyen de réception de la voix (100) pour recevoir une voix ; et
un moyen de commande (200) pour détecter ladite commande dans la voix (Sv) reçue via ledit moyen d réception de la voix (100), et pour commander ledit dispositif cible (800) sur la base de ladite commande détectée ;
**caractérisé dans le fait de comprendre en outre** :
un moyen de validation distinct (300) pour détecter un mot clé prédéterminé dans la voix (Sv) reçue via ledit moyen de réception de la voix (100) et pour permettre que ledit moyen de commande (200) exécute la détection de ladite commande seulement pendant une période d'entrée de commande prédéterminée après que ledit mot clé ait été détecté, dans lequel ledit mot clé ne fait pas partie de ladite commande.

2. Dispositif de reconnaissance vocale (RV1) selon la revendication 1, dans lequel ledit mot clé prédéterminé est une formule magique ou un diminutif.

3. Dispositif de reconnaissance vocale (RV1) selon la revendication 1, dans lequel ledit moyen de validation (300) comprend en outre :
un moyen de détection du mot clé (310) pour détecter ledit mot clé prédéterminé dans la voix (Sv) via ledit moyen de réception de la voix (100) ;
un moyen temporisateur (320) pour démarrer le comptage de ladite période d'entrée de commande lorsque ledit moyen de détection du mot clé (310) détecte ledit mot clé ; et
un moyen de validation de comparaison (330) pour permettre que ledit moyen de commande (200) détecte ladite commande seulement pendant une période lorsque ledit moyen temporisateur (320) compte ladite période d'entrée de commande.

4. Dispositif de reconnaissance vocale (RV2) selon la revendication 1, dans lequel
ledit moyen de validation (301) comprend, en outre, un moyen de détection de correspondance (340) pour prolonger ladite période d'entrée de commande chaque fois que ledit moyen de commande (200) détecte la commande dans la période d'entrée de commande.

5. Dispositif de reconnaissance vocale (RV3) selon la revendication 1, comprenant, en outre, un moyen de commande du volume (400) pour baisser ou pour couper un son entré depuis ledit dispositif cible (900) pendant ladite période d'entrée de commande.

6. Dispositif de reconnaissance vocale (RV4) selon la revendication 1, comprenant, en outre, un moyen de réduction du composant d'entrée de son (500) pour supprimer la voix (Sv) via ledit moyen de réception de la voix (100) dans un composant correspondant au son délivré dudit dispositif cible (900).

7. Procédé de reconnaissance vocale pour commander un dispositif cible (800) avec une commande prononcée par un utilisateur, comprenant :
une étape consistant à recevoir la voix ; et
une étape consistant à détecter ladite commande dans ladite voix reçue (Sv) exécutée par le moyen de commande (200) ;
une étape consistant à commander ledit dispositif cible (800) sur la base de ladite commande détectée ;
**caractérisé dans le fait de comprendre en outre :**
une étape (S12, S13, S14 et S15) consistant à détecter un mot clé prédéterminé dans ladite voix reçue exécutée par le moyen de validation distinct (300) et de permettre ladite étape de détection de ladite commande seulement pendant une période d'entrée de commande prédéterminée après que ledit mot clé ait été détecté, dans lequel ledit mot clé ne fait pas partie de ladite commande.

8. Support d'enregistrement lisible par un ordinateur sur lequel un programme qui doit être exécuté sur un ordinateur, est enregistré, le programme comprenant un moyen de codage de programme informatique qui, lorsqu'il est exécuté, fait que l'ordinateur exécute toutes les étapes du procédé de la revendication 7.
